## Europäisches Patentamt
## European Patent Office
## Office européen des brevets

(11) Veröffentlichungsnummer: **0 216 829**
**B1**

(12) **EUROPÄISCHE PATENTSCHRIFT**

(45) Veröffentlichungstag der Patentschrift:
27.09.89

(21) Anmeldenummer: **86901798.8**

(22) Anmeldetag: **14.03.86**

(86) Internationale Anmeldenummer:
**PCT/DE 86/00105**

(87) Internationale Veröffentlichungsnummer:
**WO 86/05919 (09.10.86** Gazette **86/22)**

(51) Int. Cl.⁴: **H 01 G 1/02**

(54) **ELEKTRISCHER KONDENSATOR MIT MOLEKULARSIEB IM FÜLLMITTEL.**

(30) Priorität: **03.04.85 DE 3512159**

(43) Veröffentlichungstag der Anmeldung:
**08.04.87 Patentblatt 87/15**

(45) Bekanntmachung des Hinweises auf die Patenterteilung:
**27.09.89 Patentblatt 89/39**

(84) Benannte Vertragsstaaten:
**AT BE CH DE FR GB IT LI**

(56) Entgegenhaltungen:
**FR-A- 1 435 345**
**FR-A- 2 405 546**
**FR-A- 2 570 216**

(73) Patentinhaber: **ROBERT BOSCH GMBH, Postfach 50, D-7000 Stuttgart 1 (DE)**

(72) Erfinder: **FÖRSTER, Herbert, Grundackerweg 28, D-7060 Schorndorf (DE)**

ACTORUM AG

## Beschreibung

*Stand der Technik*

Die Erfindung geht aus von einem elektrischen Kondensator nach der Gattung des Hauptanspruches. Derartige Kondensatoren werden beispielsweise in Form von Aluminium-Becherkondensatoren mit Rundwickeln und Ölfüllung für obere Grenztemperaturen bis 100°C für Wechselspannungsbelastung und für Gleichspannungsbelastung eingesetzt. Die Ölfüllung, die den Wickel umgibt, verdrängt das ursprüngliche Luftvolumen im Kondensator bis auf ein geringes Rest-Luftpolster, das zur Vermeidung eines Aufplatzens des Gehäuses infolge thermischer Ölausdehnung bei erhöhten Temperaturen notwendig ist. Die Ölfüllung schützt den Wickel gegen schädliche Einflüsse, die bei Luftfüllung auftreten würden. Außerdem dient das Füllmittel als hydraulisches Druckübertragungsmittel, wenn ein mit einer Gehäuseausdehnung gekoppelter Abreiß-Abschalter im Kondensator betätigt werden soll.

Besonders schädliche Einflüsse auf das Dielektrikum des Kondensators werden durch Wasser ausgeübt, insbesondere durch Erhöhung der Leitfähigkeit, der dielektrischen Verluste und als Reaktionspartner unerwünschter chemischer Reaktionen mit oftmals schädlichen Reaktionsprodukten. Die Folge ist beispielsweise eine Schichtzersetzung bei aufmetallisierten Kondensatorbelägen oder eine Hydrolyse mit Estern in Form von Imprägniermitteln oder Kunststofffolien als Dielektrikum. Die Folgen hiervon wiederum sind Kapazitätsverlust durch Verringerung der Belagfläche, Anstieg der dielektrischen Verluste und Eigenerwärmung sowie Teilentladungen und Durchschläge im Dielektrikum und Gasentwicklung, die zum beschleunigten Ausfall des Kondensators führen. Alle diese Prozesse verlaufen umso intensiver und schneller, je höher die elektrische Feldstärke und/oder die Temperatur ist.

Es ist daher bereits vorgeschlagen worden, einen bestimmten Anteil der vorhandenen Wasserreste bei der Kondensatorherstellung durch bekannte Trocknungs- und/oder Imprägnier- und/oder Füllverfahren zu entfernen, bzw. vom Dielektrikum fernzuhalten. Dies erreicht man beispielsweise durch Vakuum-Trocknung und Imprägnierung von Papierbänder enthaltenden Wickeln, durch Füllung des Kondensatorgehäuses mit getrockneten flüssigen Füllmitteln und durch dichten Verschluß des Gehäuses gegen Eindringen von äußerer Luftfeuchtigkeit.

Aus der DE-OS 2 445 314 ist es bekannt, das Differenzvolumen zwischen dem Gehäuse und einem Kondensatorwickel zumindest teilweise mit Sauerstoff- und/oder Wasserdampf absorbierenden Stoffen zu füllen. Hierdurch wird versucht, im Restvolumen vorhandenen Sauerstoff und/oder Wasserdampf unschädlich zu machen und eine Einwirkung auf die Belagschichten des Kondensators zu verhindern. Hierbei war schon erkannt worden, daß selbst geringe Konzentrationen von Sauerstoff und Wasserdampf in den zwischen den Wickellagen eingeschlossenen Luftschichten ausreichen, um unter erhöhter Wechselspannungsbelastung unerwünschte chemische Umwandlungsprozesse einzuleiten. Die getroffenen Maßnahmen haben sich jedoch als nicht ausreichend erwiesen.

Weiterhin ist es bekannt, zumindest einige durch Restwasser bedingte schädliche Reaktionsprodukte, z.B. Säuren, durch bestimmte Additive einzufangen und unschädlich zu machen. Dies erreicht man z.B. durch Beigabe von physiologisch nicht unbedenklichen Epoxidverbindungen in Ester-Imprägniermittel oder -Füllmittel.

Trotz sorgfältiger Beachtung aller bekannten Maßnahmen trat jedoch immer noch ein Anstieg der dielektrischen Verluste auf während des Betriebes an erhöhter Wechselspannung und Gleichspannung sowie an Gleichspannung mit überlagerter Wechselspannung, insbesondere bei höheren Temperaturen. Dies war vor allem der Fall bei Kondensatoren, die mit einem flüssigen Ester oder Glykol imprägniert und/oder gefüllt waren.

Weiterhin ist bei Kondensatoren mit nicht imprägnierten Wickeln und Polypropylenfolien als Dielektrikum in Vergleichsversuchen sowohl bei Lagerung an erhöhter konstanter Temperatur von 90°C als auch an Wechseltemperatur 35°C/90°C als auch unter erhöhter 50 Hz-Spannungsbelastung von 63 V/µm beobachtet worden, daß der 50 Hz-Verlustfaktor bei den flüssiggefüllten Kondensatoren über der Prüfdauer anstieg, während bei den gleichen, jedoch mit normaler Raumluft oder mit ausgehärtetem Gießharz gefüllten Kondensatoren nahezu kein Verlustfaktoranstieg meßbar war. Da bei den flüssiggefüllten Kondensatoren das Füllmittel beim Füllvorgang außergewöhnlich niedrigen Restwassergehalt besaß und zumindest in die äußeren Wickelbereiche eingedrungen war, konnte gefolgert werden, daß Restwasser von den inneren Oberflächen des Kondensators in die Flüssigkeiten eindiffundiert und von diesen gelöst wird. Hierdurch wird bereits außerhalb des Wickels eine Verlustfaktorerhöhung der Flüssigkeiten verursacht, erheblich stärker jedoch nach dem Einschleppen von Waserresten mit den Flüssigkeiten in aktive Wickelbereiche unter zusätzlicher Einwirkung des elektrischen Feldes. Dieser Effekt wird sowohl bei selbstheilenden Kondensatoren wie auch bei Kondensatoren mit Aluminiumfolien-Belägen und ebenfalls bei imprägnierten Wickeln beobachtet. Im letzteren Fall verläuft wegen der notwendigen Austauschaktion oder Mischung zwischen praktisch wasserfreiem Imprägniermittel und wasserbeladenen Füllmittel die Verlustfaktorerhöhung langsamer.

Die von den inneren Kondensatoroberflächen, insbesondere von der Aluminium-Becherwand, den Isolierteilen und dem Gehäusedeckel, durch die Füllflüssigkeit abgelösten Wasserreste können praktisch nicht vermieden werden. Andererseits werden diese Wasserreste relativ leicht von den Füllflüssigkeiten wie Glykole, Ester, Pflanzenöle oder Gießharze, z.B. flüssiges Epoxid- oder Polyurethanharz (ohne Härteranteil), aufgenommen und mit diesen in aktive, elektrisch belastete Wickelbereiche transportiert. Außerdem werden die innerhalb von Isolierteilen aus Kunststoff oder Papier befindlichen Restwassermengen allmählich an deren Oberflächen nachdiffundieren und ebenfalls vom Füllmittel aufgenommen. Der durch das Zusammenwirken von diesen Restwassermengen und Füllflüssigkeiten verursachte Anstieg der dielektrischen Verluste ist im allgemeinen absolut zwar gering, kann jedoch ein Vielfaches der Ausgangsverluste bei verlustarmen Kondensatoren betragen. Entsprechend steigt die erzeugte Verlustwärmemenge und der Kondensator kann infolge zu hoher Wickeltemperatur ausfallen.

*Vorteile der Erfindung*

Der erfindungsgemäße elektrische Kondensator mit den kennzeichnenden Merkmalen des Hauptanspruches weist die geschilderten Nachteile praktisch nicht mehr auf. Es wird die Vorschädigung des Füllmittels durch das unvermeidliche Restwasser im Kondensator und der Transport von Restwasser oder vorgeschädigtem Füllmittel in aktive Wickelbereiche verhindert oder zumindest soweit reduziert, daß ein einwandfreier Betrieb des Kondensators über lange Zeit gewährleistet ist. Durch die Wahl der Mindest-Teilchengröße der Molekularsiebe größer als die Spaltweiten zwischen den Wickellagen des Kondensators ist sichergestellt, daß die Teilchen nicht in aktive Bereiche des Kondensators eindringen und dort Störungen verursachen. Die Auswahl der Molekularsiebe erfolgt entsprechend der Größe des $H_2O$-Moleküls, derart, daß diese Restwassermoleküle in den Kristallgitterhohlräumen der Molekularsiebe selektiv adsorbiert werden, während andere Moleküle, insbesondere die Moleküle der flüssigen Füllmittel, aufgrund ihrer Größe die Wasseradsorption praktisch nicht behindern. Es erfolgt also auf physikalischem Weg eine Trocknung des Füllmittels, wobei sich als Molekularsiebe insbesondere synthetische Zeolithe eignen. Letztere sind als Trocknungsmittel, insbesondere für Kühlflüssigkeiten, grundsätzlich bekannt und im Handel erhältlich. Neben Zeolithen eignen sich als Molekularsiebe auch Materialien auf Basis von Kohlenstoff, Oxiden und Gläsern.

Die in Pulver- oder Granulatform vorliegenden Molekularsiebe binden das eingefangene Wasser so fest, daß es unter den üblichen Betriebsbedingungen des Kondensators nicht wieder abgegeben wird und somit unschädlich bleibt. Weiterhin gehen die erfindungsgemäßen Molekularsiebe keine für den Kondensator schädlichen chemischen Reaktionen mit Wasser, den Füllmittelbestandteilen oder sonstigen Kondensatorteilen ein. Schließlich besitzen sie gegenüber anderen Trocknungsmitteln den Vorteil, daß ihre Mindest-Teilchengrösse so wählbar ist, daß sie nicht zwischen die Wickellagen des aktiven Dielektrikums eindringen und dort als Fremdkörper nachteilige Folgen verursachen.

Die Größe der Porenöffnungen, durch welche die zu adsorbierenden Wassermoleküle in die Hohlräume der Molekularsiebe eindringen, soll mindestens ca. 0,3 nm betragen. Die maximal zulässige Porenweite ist so zu bemessen, daß die vorhandenen Füllmittelmoleküle nicht eindringen können. Für ein Gemisch aus Wasserresten mit üblichen Kondensatorfüllmitteln und Additiven haben sich Porenweiten zwischen 0,3 und 0,9 nm bewährt, insbesondere zwischen 0,3 und 0,5 nm. In Spezialfällen können auch größere Porenweiten gewählt werden, sofern die ursprünglich im Füllmittel enthaltenen Moleküle hinreichend groß sind und zusätzlich auch andere schädliche, beispielsweise aus Kunststoffteilen ausdiffundierende Moleküle eingefangen werden sollen.

Die erfindungsgemäß als Molekularsiebe besonders geeigneten Zeolithe (kristalline Alkali-Alumosilikate) mit den genannten Porenweiten haben Teilchendurchmesser zwischen 1 und 10 μm. Statt dessen können die Molekularsiebe jedoch auch als größere Formkörper ausgebildet werden, welche aus Molekularsiebpulver und einem für Wassermoleküle durchlässigen Bindemittel und/oder Trägergerüst bestehen. Die Wasserbeladungskapazität derartiger Molekularsiebe ist auch bei geringsten Wassermengen in nichtwäßriger flüssiger Umgebung außerordentlich hoch und beträgt ca. 20% ihrer Masse.

Die in den Kondensator einzubringende Mindestmenge des Molekularsiebs richtet sich nach den im Kondensator vorhandenen Restwassermengen und nach der jeweiligen Wasserbeladungskapazität des verwendeten Trocknungsmittels. Erfahrungsgemäß liegt der benötigte Molekularsiebanteil bei ca. 0,5 bis 10 Gew.-% des verwendeten Füllmittels. Eine gleichmäßige Verteilung des Trocknungsmittels im Füllmittel zumindest beim Einfüllen desselben in den Kondensator verbessert die angestrebte Wirkung. Diese tritt jedoch auch bei ungleichmäßiger Verteilung auf, weil die Diffusion der Wassermoleküle in die Siebhohlräume auch mit ungleichmäßig verteilten Zeolith-Teilchen hinreichend schnell erfolgt, so daß auch hierbei eine unzulässige, bzw. eine stetig ansteigende Verlustfaktorerhöhung nicht auftritt.

Die Funktion des Trocknungsmittels ist erfüllt, wenn es im Füllöl bewegliches Restwasser adsorbiert hat. Wenn der Kondensator nach seinem Verschließen eine zeitlang auf seiner maximalen Betriebstemperatur oder darüber gehalten wird, so beschleunigt dies die Ablösung des Oberflächenwassers von den inneren Oberflächen des Kondensators und erhöht die Beweglichkeit der Wassermoleküle im Füllmittel. Verfahrensmäßig hat es sich daher bei der Herstellung der erfindungsgemäßen Kondensatoren als vorteilhaft erwiesen, wenn diese nach dem Verschließen des Gehäuses bis zur weitgehenden Aufnahme vorhandenen Restwassers in den Molekularsieben auf einer erhöhten Temperatur gehalten werden. Hierbei ist es besonders wirksam, wenn die Molekularsiebe in suspendierter Form in das Füllmittel eingebracht werden. Statt dessen kann es bezüglich der Herstellung des Kondensators fertigungstechnisch jedoch auch zweckmässig sein, wenn die Molekularsiebe in Form einer Paste aus Molekularsiebpulver und einem flüssigen Kondensatorfüllmittel vor dem Füllen des Kondensators in das Füllmittel und/oder in das ungefüllte Gehäuse eingebracht werden.

Ein direkter Schutz der Wickeloberfläche gegen das Eindringen von Restwasser ergibt sich vorteilhafter Weise dadurch, daß auf einen imprägnierten Wickel mit hinreichend porösen Kontaktbrücken und Deckwindungen aus rauhem Papier auf dessen Oberfläche eine Trocknungsmittelschicht erzeugt wird. Dies kann bei einem imprägnierten Kondensator in besonders einfacher Weise dadurch bewirkt werden, daß die im Imprägniermittel suspendierten Molekularsiebe auf und in den Kontaktbrücken sowie den Deckwindungen abgelagert werden, weil sie aufgrund ihrer Größe zwischen die aktiven Wickellagen nicht eindringen können.

Ein weiteres vorteilhaftes Verfahren zur Einbringung von Molekularsieben besteht im Auftragen einer Lackschicht auf den Kondensatorteilen oder den Wickeloberflächen oder in der Einbringung einer Kunststoff-Folie, welche jeweils mit einem pulverförmigen Molekularsieb pigmentiert sind. Hierbei kann mit Vorteil ein Bindemittel verwendet werden, welches die Wasserdurchlässigkeit behindert, jedoch unter der Einwirkung des nachfolgend eingebrachten Füllmittels angegriffen wird, so daß die Siebteilchen zur Wasseraufnahme freigelegt werden.

Bei allen erfindungsgemäßen Herstellungsverfahren ist es also wesentlich, daß zunächst die Beladung der Molekularsiebe mit nicht aus dem Kondensator oder Füllmittel stammendem Wasser gering gehalten und die Diffusion der Wassermoleküle im Kondensator zu den Sieben hin gewährleistet wird. Andererseits soll das Eindringen von Restwasser enthaltenden Füllmittel in den Wickel weitgehend unterbunden werden, was man zusätzlich durch einen festen Wickel mit glatten Bänderoberflächen sowie durch Imprägnierung der äußeren Wickelhohlräume vor der Kondensatorfüllung unterstützt. Weiterhin ist die Kombination der erfindungsgemäßen Maßnahme mit bekannten Additiven im Füllmittel und/oder Imprägniermittel möglich, sofern diese die adsorbierende Wirkung der Molekularsiebe nicht nennenswert behindert. Insbesondere können hierbei Oxidationsstabilisatoren oder sogenannte Säurefänger mitverwendet werden. Durch die erfindungsgemäßen Maßnahmen ist es möglich, Kondensatoren hoher Blindleistungsdichte, d.h. mit geringen dielektrischen Verlusten, bei hohen Feldstärken oder mit verlängerter Lebensdauer zu schaffen.

*Zeichnung*

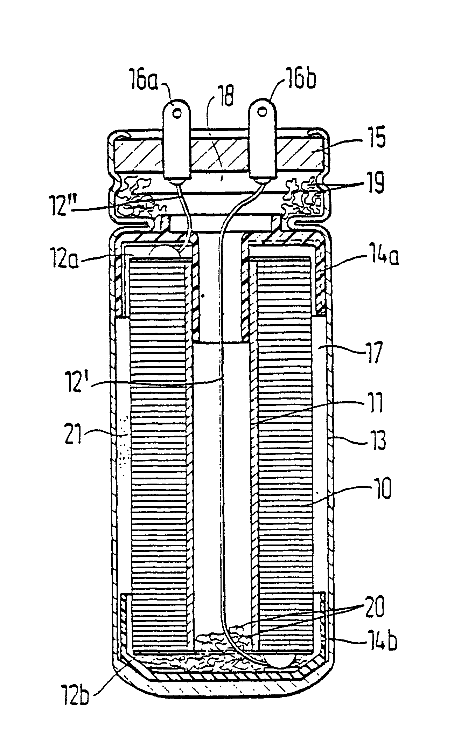

Die Figur zeigt die Erfindung in schematischer Darstellung.

*Beschreibung von Ausführungsbeispielen*

In der Figur ist ein erfindungsgemäßer Kondensator dargestellt mit einem Rundwickel 10, welcher auf ein festes Kernrohr 1 aus Polypropylen aufgewickelt ist. Der Rundwickel 10 selbst ist mit hoher Wickelspannung fest ausgeführt, um ein Eindringen von Molekularsieben zu verhindern. Der Wickel besteht aus zwei Polypropylenbändern, die auf je einer Oberfläche unter Freilassung von jeweils einem unmetallisierten Randstreifen mit einer dünnen Zinkschicht von 4 bis 8 Ohm Flächenwiderstand metallisiert sind. An dem dem unmetallisierten Rand gegenüberliegenden Bandrand sind die Zinkbelagschichten verstärkt und besitzen dort Flächenwiderstände von 1 bis 3 Ohm auf einer Breite von 3 bis 5 mm. Die beiden Zinkbeläge sind durch aufgeschoopte Metallbrücken 12a und 12b kontaktiert, welche wiederum über Anschlußdräthe 12' und 12'' mit äußeren Kondensatoranschlüssen 16a und 16b elektrisch leitend verbunden sind. Durch die Verstärkung der Zinkbeläge im Bereich der Brückenkontaktierung wird ein besserer elektrischer Kontakt und eine alterungsbeständige Verbindung mit den Belägen erreicht.

Der Wickel 10 ist in ein zylindrisches Bechergehäuse 13 aus Aluminium eingebaut, welches durch einen die Anschlüsse 16 tragenden Kunststoffdeckel 15 dicht verschlossen ist. Zwischen den Wickel 10 und das Gehäuse 13 sind Isolierstoffkappen 14a und 14b aus Kunststoff eingefügt, welche der Isolation zwischen Wickel und Gehäuse dienen. Die Kappe 14a gewährleistet außerdem die Zentrierung des Wickels 10 im Gehäuse 13.

Der dargestellte erfindungsgemäße Kondensator ist mit einem flüssigen Füllmittel 17 gefüllt. Ein für die Füllmittelausdehnung notwendiges Ausgleichsvolumen 18 zwischen Füllmittel 17 und Deckel 15 besteht aus normaler Raumluft.

Ein geeignetes Füllmittel 17 ist beispielsweise Polypropylenglykol mit einem mittleren Moleculargewicht von 2000. Diesem ist als Molekularsieb ein Zusatz von 2 Gew.-% Zeolithpulver vom Typ Kalium-Natrium-Alumosilikat mit einer Porenweite von 0,3 nm, und einer Teilchengröße von 1 bis 10 µm beigegeben. Die Zelolithpulverteilchen 21 sind zur Veranschaulichung überdimensional groß dargestellt.

Ein anderes, besonders geeignetes Füllmittel 17 für den Kondensator ist Rizinusöl. Hierbei können entweder zusätzlich zu den fein verteilten Molekularsieben 21 zusätzlich im Luftraum 18 und im unteren Bereich des Kernrohres 11 Zeolithperlen 19, 20 eingebracht werden. Bei diesen Perlen handelt es sich um Natrium-Alumosilikat aus einer Granulatmischung mit Porenweiten von 0,4 nm und 0,9 nm. Bei ausschließlicher Verwendung von Zeolithperlen 19 als Molekularsiebe beträgt deren Masseanteil vorzugsweise ca. 4 Gew.-%, bezogen auf die Rizinusölmenge des Füllmittels 17.

Als Ausführungsbeispiele wurden selbstheilende und verlustarme Kondensatoren für die Nennspannung 460 Veff/50 Hz (Dauerbetrieb) und eine obere Grenztemperatur von 85°C unter sorgfältigster Beachtung von bekannten Trocknungs- und Trockenhaltungsmaßnahmen hergestellt. Die Restwassergehalte der flüssigen Kondensator-Füllmittel oder -Tränkmittel betrugen beim Einfüllen ca. 0,01 % oder weniger.

Die Kondensatorgehäuse bestanden aus Aluminium-Rundbechern mit abgedichtetem Kunststoffdeckel-Verschluß, das notwendige relativ kleine Ausgleichsvolumen bestand aus trockener Luft.

Einer Vergleichsgruppe ansonsten gleicher Kondensatoren wurden erfindungsgemäß Zeolithe zugesetzt, entweder gleichzeitig mit den trockenen Füllmitteln oder gesondert vor dem Füllen der Becher. Als Maß für die angestrebte Verbesserung dienten die Zunahmen $\Delta \tan \delta$ und die Anstiege über der Zeit der bei der Spannung 500 Veff/50 Hz gemessenen Verlustfaktoren der Kondensatoren nach Temperaturwechselprüfungen 35°C/90°C, Zyklusdauer 12 Stunden und/oder Dauerspannungsprüfungen bei 575 Veff/50 Hz und 85°C Kondensatorgehäusetemperatur.

Geprüft wurden Kondensatoren mit Wickeln aus zwei einseitig mit Zink metallisierten Polypropylenfolien, wobei der Wickel nicht gesondert imprägniert wurde.

*Beispiel 1*

Wickel aus 8 µm dicker Polypropylenfolie, 2,8 µF, tanδ $\simeq$ 0,19 × 10$^{-3}$ vor Prüfbeginn.

Die Prüfdauer betrug jeweils 300 Stunden, 10 Kondensatoren je Prüfung. Die Prozent-Angaben sind Masseanteile, bezogen auf die Füllflüssigkeit. Bei den laufenden Nummern 1, 3 und 4 der folgenden Tabelle wurde als Molekularsieb Kalium-Natrium-Alumosilikat benutzt, bei der laufenden Nummer 2 Natrium-Alumosilikat.

| lfd. Nr. | Füllmittel | Zeolith-Zugabe | Mittelwert Δtanδ (10$^{-3}$) nach | |
| --- | --- | --- | --- | --- |
| | | | Dauerspannung | Temp.-Wechsel |
| 1 | Polypropylenglykol mittl. Molekulargewicht = 2000 | ohne | 0,35 | |
| | | 2% Pulver in Füllmittel, Porenweite 0,3 nm (3 Å) | 0,1 | |
| 2 | Synthetischer symmetrischer Ester auf Basis eines Tetraalkohols | ohne | 0,64 | 0,46 |
| | | 5% Pulver in Füllmittel, Porenweite 0,4 nm | 0,23 | 0,16 |
| 3 | Rizinusöl | ohne | 0,31 | 0,51 |
| | | 5% Paste aus Pulver 0,3 nm und Rizinusöl in den Kondensator | 0,11 | 0,13 |
| 4 | Ditolylether | ohne | 0,6 | |
| | | wie Nr. 3 | 0,4 | |
| 5 | Ausgehärtetes Gießharz | ohne | 0,08 | |

Die tanδ-Zunahme der erfindungsgemäßen Kondensatoren sind in jedem Fall erheblich kleiner und die tanδ-Anstiege nehmen außerdem im Gegensatz zu den konventionellen Kondensatoren über der Prüfzeit ab. Letzteres erklärt sich aus der Blockierung von Restwasserreservoiren und ist besonders wichtig zur Erzielung einer erhöhten Lebenserwartung oder Leistungsdichte.

Die geringen, auch bei fester Gießharzfüllung noch auftretenden tanδ-Zunahmen von $\leq$ 0,1 × 10$^{-3}$ können in diesem Fall durch die zwar geringen, aber unvermeidlichen Wasserhautreste und eventuell auch Luftreste auf, bzw. zwischen den Polypropylenfolien der Wicklung oder auch durch Folien-Alterungsprozesse verursacht sein.

Die Füllflüssigkeiten unter den laufenden Nummern 1, 3 zeichnen sich durch geringe Anquellung einer Polypropylenfolie aus, beispielsweise im Vergleich zu Mineralölen oder Polyisobutylenen. Das Polypropylenglykol und ebenso Rizinusöl haben eine relativ geringe Benetzbarkeit auf Polypropylen und relativ hohe Viskosität, wodurch das Eindringen in den Wickel erschwert und damit auch der tanδ-Anstieg behindert wird.

Der Ditolylether unter der laufenden Nummer 4 besitzt eine vergleichsweise gute Benetzbarkeit und geringe Viskosität. Die Zeolith-Zugabe könnte daher zweckmäßigerweise höher oder in gleichmäßigerer Verteilung erfolgen, als bei dem Beispiel unter laufender Nummer 4 angegeben ist.

Bei einem Ester (laufende Nummer 2) ebenso wie beim Ditolylether ist zwar die Wasseraufnahme relativ gering, jedoch steigen die Verlustfaktoren dieser Flüssigkeiten mit geringen Wasserzugaben und unterhalb der Sättigungsgrenze stark an. Beim Ditolylether hat eine Wassergehaltserhöhung von 0,01 % auf 0,03 % eine tanδ-Erhöhung von ca. 0,1 × 10$^{-3}$ auf ca. 1 × 10$^{-3}$ und bei dem speziellen Ester von < 0,01 % auf 0,02 % Wasser eine tanδ-Erhöhung von 0,5 × 10$^{-3}$ auf 2 × 10$^{-3}$ zur Folge. Derartig geringe Wasseraufnahmen können ohne weiteres durch das Restwasser im Kondensator erfolgen. Da diese tanδ-Zunahmen erheblich größer als der Verlustfaktor des Polypropylen-Dielektrikums sind muß bei derartigen Flüssigkeiten für hinreichend schnelles und weitgehend vollständiges Abfangen des Restwassers vorgesorgt werden, bevor die Flüssigkeit in die kapazitiv wirksamen Wickelbereiche eindringt.

*Beispiel 2*

Wickel aus 8 µm dicker Polypropylenfolie, 50 µF-Kondensatoren, tanδ $\simeq$ 0,5 × 10$^{-3}$ vor Prüfbeginn, Füllung mit Rizinusöl, je fünf Kondensatoren.

a) Dauerspannungsprüfung bei 575 Veff/50 Hz, Kondensatorgehäusetemperatur 85°C über 600 Stunden.

Ohne Zusatz von Zeolith (Natrium-Alumosilikat):

Δtanδ = 0,6 - 0,7 × 10$^{-3}$, tanδ weiter steigend.

Mit Zusatz von 4 Gew.-% Zeolith-Perlen, einer Mischung aus Perlen mit Porenweiten von 0,4 nm und 0,9 nm, Körnung 1-2,5 mm, willkürlich verteilt im Kondensator:

$\Delta\tan\delta = 0,23 \times 10^{-3}$, $\tan\delta$ abflachend.

b) Temperaturwechselprüfung     35°C/90°C, 2000 Stunden (166 Zyklen).
Ohne Zusatz:

$\Delta\tan\delta = 0,8 \times 10^{-3}$, $\tan\delta$ weiter steigend.

Mit Zusatz von 2 Gew.-% Zeolithpulver im Füllöl, Porenweite 0,3 nm:

$\Delta\tan\delta = 0,1 - 0,13 \times 10^{-3}$, abflachend.

Mit Zusatz von 5 Gew.-% Zeolithpaste in den Kondensator, Porenweite 0,3 nm:

$\Delta\tan\delta = 0,1 - 0,15 \times 10^{-3}$, abflachend.

*Beispiel 3*
Wickel aus 6 µm dicker Polypropylenfolie, 3 µF-Kondensatoren.

Füllung mit Rizinusöl, $\tan\delta \simeq 0,2 \times 10^{-3}$ vor Prüfbeginn.

Dauerspannungsprüfung bei 530 Veff/50 Hz, Gehäusetemperatur 85°C über 800 Stunden.
Ohne Zusatz:

$\Delta\tan\delta \simeq 0,2 \times 10^{-3}$, weiter steigend.

Mit Zusatz von ca. 5 Gew.-% Zeolithpulver im Füllöl:

$\Delta\tan\delta \simeq 0,06 \times 10^{-3}$, abflachend.

Als Belagschichten für die erfindungsgemäßen Kondensatoren eignen sich insbesondere Schichten aus Zink und/oder Aluminium oder auch Misch- oder Mehrfachschichten unter Verwendung von Zink und/oder Aluminium mit Kupfer, Magnesium, Kadmium, Nickel und/oder Silber.

## Patentansprüche

1. Elektrischer Kondensator mit wenigstens einem Wickel, vorzugsweise aus metallisierten Isolierstoff-Bändern, der in einem Gehäuse angeordnet ist, welches mit Ausnahme eines Rest-Luftpolsters mit einem flüssigen Füllmittel oder mit einem festen Füllmittel gefüllt ist, dessen Tropfpunkt höchstens 15°C oberhalb der maximal zulässigen Betriebstemperatur des Kondensators liegt, dadurch gekennzeichnet, daß zusätzlich zu dem Füllmittel (17) wenigstens ein Molekularsieb (19, 20, 21) in den Kondensator eingebracht ist, dessen Porenweiten zwischen der Größe der zu adsorbierenden Moleküle und der Größe der vorhandenen Füllmittelmoleküle liegen und dessen Teilchen größer sind als die Spaltweiten zwischen den Wickellagen des Kondensators.

2. Kondensator nach Anspruch 1, dadurch gekennzeichnet, daß als Molekularsiebe Zeolithe verwendet werden.

3. Kondensator nach Anspruch 1 oder 2, dadurch gekennzeichnet, daß die Porenweiten der Molekularsiebe zwischen etwa 0,3 und 0,9 nm, vorzugsweise zwischen etwa 0,3 und 0,5 nm liegen.

4. Kondensator nach einem der vorhergehenden Ansprüche, dadurch gekennzeichnet, daß die Molekularsiebe (21) pulverförmig sind mit einem Teilchendurchmesser von 1 bis 10 µm.

5. Kondensator nach einem der Ansprüche 1 bis 3, dadurch gekennzeichnet, daß die Molekularsiebe als Formkörper ausgebildet sind, welche aus Molekularsiebpulver und einem für Wassermoleküle durchlässigen Bindemittel bestehen.

6. Kondensator nach einem der vorhergehenden Ansprüche, dadurch gekennzeichnet, daß der Molekularsiebanteil 0,5 bis 10 Gew.-% des Füllmittels beträgt.

7. Verfahren zur Herstellung eines elektrischen Kondensators nach einem der Ansprüche 1 bis 6, dadurch gekennzeichnet, daß der Kondensator nach dem Verschließen seines Gehäuses (13) eine zeitlang — bis zur weitgehenden Aufnahme vorhandenen Restwassers in den Molekularsieben — auf einer erhöhten Temperatur, bzw. auf seiner maximalen Betriebstemperatur, gehalten wird.

8. Verfahren zur Herstellung eines elektrischen Kondensators nach einem der Ansprüche 1 bis 6, dadurch gekennzeichnet, daß die Molekularsiebe in dem Füllmittel suspendiert in den Kondensator eingebracht werden.

9. Verfahren zur Herstellung eines Kondensators nach einem der Ansprüche 1 bis 6, dadurch gekennzeichnet, daß die Molekularsiebe in Form einer Paste aus Molekularsiebpulver und einem flüssigen Kondensatorfüllmittel vor dem Füllen des Kondensators in das Füllmittel (17) und/oder in das ungefüllte Gehäuse (13) eingebracht werden.

10. Verfahren zur Herstellung eines Kondensators nach einem der Ansprüche 1 bis 6, mit einem imprägnierten Wickel (10), der poröse Kontaktbrücken (12a, b), vorzugsweise aus Zink, auf den Stirnflächen und/oder Deckwindungen aus rauhen Bändern, vorzugsweise aus Papier, auf der Mantelfläche besitzt, dadurch gekennzeichnet, daß die Molekularsiebe durch Suspension im Imprägniermittel auf und in Kontaktbrücken und Deckwindungen gebracht werden.

11. Verfahren zur Herstellung eines Kondensators nach einem der Ansprüche 1 bis 6, dadurch gekennzeichnet, daß die Molekularsiebe als weitgehend wasserundurchlässige, mit Molekularsiebpulver pigmentierte Lackschicht oder Kunststoff-Folie in den Kondensator eingebracht werden, wobei ein die Wasserdurchlässigkeit behinderndes Bindemittel nach dem Füllen des Kondensators durch das Füllmittel (17) angegriffen und die Molekularsiebteilchen (21) zur Wasseraufnahme freigelegt werden.

## Claims

1. Electrical capacitor having at least one winding, preferably of metallized insulating material strips which is arranged in a casing which, except for a residual air cushion, is filled with a liquid filling agent or with a solid filling agent whose dropping point is not more than 15°C above the maximum permissible operating temperature of the capacitor, characterized in that, in addition to the filling agent (17), at least one molecular sieve (19, 20, 21) whose pore sizes are between the size of the molecules to be adsorbed and the size of the filling agent molecules present and whose particles are larger than the gap width between the winding layers is introduced into the capacitor.

2. Capacitor according to Claim 1, characterized in that zeolites are used as molecular sieves.

3. Capacitor according to Claim 1 or 2, characterized in that the pore sizes of the molecular sieves are between about 0.3 and 0.9 nm, preferably between about 0.3 and 0.5 nm.

4. Capacitor according to one of the preceding claims, characterized in that the molecular sieves (21) are pulverulent and have a particle diameter of 1 to 10 µm.

5. Capacitor according to one of Claims 1 to 3, characterized in that the molecular sieves are formed as moulded bodies which are composed of molecular sieve powder and a binder permeable to water molecules.

6. Capacitor according to one of the preceding claims, characterized in that the proportion of molecular sieve is 0.5 to 10% by weight of the filling agent.

7. Process for manufacturing an electrical capacitor according to one of Claims 1 to 6, characterized in that the capacitor is kept for a time at an elevated temperature or at its maximum operating temperature — until the residual water is largely absorbed in the molecular sieves — after its casing (13) has been sealed.

8. Process for manufacturing an electrical capacitor according to one of Claims 1 to 6, characterized in that the molecular sieves are introduced into the capacitor suspended in the filling agent.

9. Process for manufacturing a capacitor according to one of Claims 1 to 6, characterized in that the molecular sieves are introduced in the form of a paste of molecular sieve powder and a liquid capacitor filling agent before the capacitor is loaded into the filling agent (17) and/or into the unfilled casing (13).

10. Process for manufacturing a capacitor according to one of Claims 1 to 6, having an impregnated winding (10) and which has porous contact bridges (12a, b), preferably of zinc, on the end faces and/or covering windings of rough strips, preferably of paper, on the lateral suface, characterized in that the molecular sieves are placed on and in contact bridges and covering windings by suspension in the impregnating agent.

11. Process for manufacturing a capacitor according to one of Claims 1 to 6, characterized in that the molecular sieves are introduced into the capacitor as a lacquer layer largely impermeable to water and pigmented with molecular sieve powder or as plastic film, a binder impeding the water permeability being attacked by the filling agent (17) after filling the capacitor and the molecular sieve particles (21) being exposed in order to absorb water.

## Revendications

1. Condensateur électrique avec au moins un enroulement, de préférence des rubans de matière isolante métallisée, disposé dans un carter, rempli, à l'exception d'un coussin d'air résiduel, d'un milieu de remplissage liquide ou solide, dont la température d'égouttement est située au plus à 15°C au-dessus de la température de fonctionnement maximale admissible du condensateur, caractérisé en ce qu'en plus du milieu de remplissage (17), au moins un tamis moléculaire (19, 20, 21) est logé dans le condensateur, dont la largeur des pores est située entre la taille des molécules à adsorber et la taille des molécules de milieu de remplissage existantes, dont les particules sont plus grandes que les interstices entre les couches de l'enroulement du condensateur.

2. Condensateur selon la revendication 1, caractérisé en ce qu'on utilise de la zéolithe pour le tamis moléculaire.

3. Condensateur selon la revendication 1 ou 2, caractérisé en ce que les largeurs des pores du tamis moléculaire se situent entre environ 0,3 et 0,9 mm, de préférence entre environ 0,3 et 0,5 mm.

4. Condensateur selon l'une des revendications précédentes, caractérisé en ce que les tamis moléculaires (21) sont de forme poudreuse avec un diamètre de particule allant de 1 à 10 µm.

5. Condensateur selon l'une des revendications 1 à 3, caractérisé en ce que les tamis moléculaires sont réalisés sous forme de corps de forme, se composant de poudre à tamis moléculaire et d'un agent liant perméable aux molécules d'eau.

6. Condensateur selon l'une des revendications précédentes, caractérisé en ce que la proportion de tamis moléculaire est située entre 0,5 et 10% en poids.

7. Procédé pour la fabrication d'un condensateur électrique selon l'une des revendications 1 à 6, caractérisé en ce qu'après fermeture de son carter (13), le condensateur est maintenu pendant une certaine durée à température élevée, ou à sa température maximale de fonctionnement, jusqu'à une absorption importante de l'eau résiduelle existante dans les tamis moléculaires.

8. Procédé pour la fabrication d'un condensateur électrique selon l'une des revendications 1 à 6, caractérisé en ce que les tamis moléculaires sont introduits dans le condensateur en suspension dans le milieu de remplissage.

9. Procédé pour la fabrication d'un condensateur électrique selon l'une des revendications 1 à 6, caractérisé en ce que les tamis moléculaires sont introduits, avant remplissage du condensateur, dans le milieu de remplissage (17) et/ou dans le carter vide (13), sous forme d'une pâte composée d'une poudre de tamis moléculaire et d'un milieu liquide de remplissage de condensateur.

10. Procédé pour la fabrication d'un condensateur électrique selon l'une des revendications 1 à 6, avec un enroulement imprégné (10), qui possède sur la périphérie des ponts de contact (12a, b) poreux, de préférence en zinc, sur les faces frontales et/ou les enroulements de recouvrement en rubans rugueux, de préférence en papier, caractérisé en ce que les tamis moléculaires sont placés par suspension dans le milieu d'imprégnation sur et dans les ponts de contact et les enroulements de recouvrement.

11. Procédé pour la fabrication d'un condensateur électrique selon l'une des revendications 1 à 6, caractérisé en ce que les tamis moléculaires sont introduits dans le condensateur sous forme notablement imperméable à l'eau, avec une couche de vernis ou une feuille de matière plastique pigmentée avec une poudre à tamis moléculaire, un agent liant empêchant la perméabilité à l'eau étant attaqué après remplissage du condensateur par le milieu de remplissage (17) et les particules de tamis moléculaire (21) destinées à l'absorption de l'eau étant libérées.